# EUROPÄISCHE PATENTSCHRIFT

(11) **EP 1 059 722 B1**
(45) Veröffentlichungstag und Bekanntmachung des Hinweises auf die Patenterteilung: **18.09.2002**
(21) Anmeldenummer: 00104021.1
(22) Anmeldetag: 26.02.2000
(51) Int. Cl.: H02K 5/128, H02K 15/14, B29C 70/00

(54) **Spalttopf aus faserverstärktem Kunststoff**
Air-gap sleeve made of fibre-reinforced plastic
Manchon d'entrefer en matière plastique renforcée de fibres

(30) Priorität: 10.06.1999 DE 19926530
(43) Veröffentlichungstag der Anmeldung: 13.12.2000
(73) Patentinhaber: WILO GmbH, D-44263 Dortmund (DE)
(72) Erfinder: Kaul, Günther, 58456 Witten (DE)
(74) Vertreter: COHAUSZ DAWIDOWICZ HANNIG & PARTNER

(56) Entgegenhaltungen:
- EP-A- 0 191 337
- EP-A- 0 667 668
- GB-A- 1 288 284
- PATENT ABSTRACTS OF JAPAN vol. 015, no. 148 (E-1056), 15. April 1991 (1991-04-15) & JP 03 022842 A (MAYEKAWA MFG CO LTD), 31. Januar 1991 (1991-01-31)

## Beschreibung

Die Erfindung betrifft einen Spalttopf für eine Spalttopfpumpe, insbesondere für eine Heizungspumpe, Brauchwasserpumpe oder Kühlwasserpumpe, vorzugsweise für den Automobilbereich, der aus faserverstärktem Kunststoff gespritzt oder gegossen ist, sowie ein Formwerkzeug zum Herstellen derartiger Spalttöpfe mit einer die Innenwandung des Spalttopfes ausformenden Innenform und mit einer die Außenwandung des Spalttopfes ausformenden Außenform.

Spalttöpfe sind bei Spalttopfpumpen mit Naßläufermotoren allgemein bekannt. Dabei sind die Spalttöpfe oft aus Kunststoff hergestellt um eine einfache Fertigung sowie einen hohen Motorwirkungsgrad zu erreichen.

Insbesondere im Kraftfahrzeugbereich ist die Verwendung derartiger Spalttopfpumpen für die Förderung der Kühlflüssigkeit bekannt. Um die Beanspruchbarkeit der Spalttöpfe zu erhöhen, die im wesentlichen durch den Innendruck des geförderten Mediums bedingt ist, kommen hier faserverstärkte Kunststoffe zum Einsatz.

Ein aus Kunststoff hergestellter Spalttopf wird üblicherweise an der Bodenmitte angespritzt. Daraus ergibt sich ein in den zylindrischen Bereichen des Spalttopfes axial verlaufender Füllvorgang, so daß sich die Verstärkungsfasern während des Kunststoffspritzvorgangs hier im wesentlichen axial ausrichten. Das bewirkt, daß in den zylindrischen Bereichen des Spalttopfes die Verstärkungsfasern aufgrund ihrer axialen Ausrichtung in Umfangsrichtung keine oder allenfalls nur geringe verstärkenden Effekte aufweisen.

Während im Kraftfahrzeugbereich üblicherweise Drücke bis ca. 3 bar auftreten, werden beim Einsatz im Heizungsbereich Drücke von ca. 10 bar und mehr erreicht. Dabei kann der Spalttopf aufgrund der nicht ausreichend vorhandenen Verstärkungswirkung in der besonders beanspruchten Umfangsrichtung beschädigt oder sogar zerstört werden, was zum Ausfall der Pumpe und somit zu zusätzlichen hohen Kosten führen kann.

Aufgabe der Erfindung ist es daher, einen konstruktiv einfachen und preiswert herzustellenden Spalttopf der eingangs genannten Art zu schaffen, der bei leichter und schneller Herstellbarkeit auch in Umfangsrichtung eine hohe Festigkeit aufweist und mit hohen Drücken belastbar ist. Aufgabe der Erfindung ist es ferner, eine konstruktiv einfache und leicht handhabbare Vorrichtung zum Herstellen eines derartigen Spalttopfes bereitzustellen.

Diese Aufgabe wird erfindungsgemäß durch ein Formwerkzeug gemäß Anspruch 1 bzw. durch einen Spalttopf gemäß Anspruch 12 gelöst. Wesentlich ist dabei, daß die Verstärkungsfasern in dem zylindrischen Topfbereich zumindest nicht überwiegend in axialer Ausrichtung orientiert sind, wodurch die Festigkeitseigenschaften des Spalttopfes auch in Umfangsrichtung wesentlich verbessert werden. Eine derartige Ausrichtung der Verstärkungsfasern auch in Umfangsrichtung kann auf besonders einfache Weise dadurch erreicht werden, daß in der die Innenwandung des Spalttopfes ausformenden Innenform und/oder in der die Außenwandung des Spalttopfes ausformenden Außenform des Formwerkzeuges eine Vielzahl von Vertiefungen und/oder Erhebungen vorgesehen ist. Durch eine derartige Oberflächenprofilierung der zylindrischen Bereiche des Spalttopfes wird bewirkt, daß die Fasern zumindest zu einem Großteil nicht axial, sondern in hiervon abweichenden Orientierungen, insbesondere auch in Umfangsrichtung ausgerichtet werden.

Sowohl ein derartiges Formwerkzeug als auch ein derartiger Spalttopf zeichnen sich durch eine einfache Konstruktion aus, so daß eine schnelle und preiswerte Fertigung des Spalttopfes auch in großen Stückzahlen ermöglicht wird.

Die Vertiefungen und/oder Erhebungen können auf besonders einfache Art und Weise dadurch realisiert sein, daß die Innenform und/oder die Außenform des Formwerkzeugs eine aufgerauhte Oberfläche aufweist.

Vorzugsweise wird vorgeschlagen, daß die Vertiefungen und/oder Erhebungen in dem Bereich der Formen vorgesehen sind, der zumindest annähernd zylindrische oder konische Bereiche des Spalttopfes ausformt. Gerade in diesen Bereichen bewirkt die Oberflächenstruktur ein Umlenken der einzelnen Verstärkungsfasern aus der axialen Ausrichtung.

Besonders vorteilhaft ist es, wenn die Vertiefungen und/oder Erhebungen langgestreckt ausgebildet sind, wobei die Richtung der Erstreckung in einem Winkel zu einer zur Achse des Spalttopfes parallelen Strecke verläuft. Ein derartiger Winkel kann vorzugsweise zwischen 5° und 90° liegen.

Besonders vorteilhaft ist es ferner, wenn die Vertiefungen ineinander übergehen und/oder die Erhebungen ineinander übergehen. Auf diese Weise wird jeweils eine Anzahl von Vertiefungen bzw. von Erhebungen zu einer gemeinsamen größeren Vertiefung bzw. Erhebung vereinigt.

In einer bevorzugten Ausführungsform ist in die Oberfläche der Innenform und/oder der Außenform ein Gewinde eingebracht. Das Gewinde kann dabei entweder eingängig oder mehrgängig ausgeführt sein. Eine Oberflächenstruktur in Form eines Gewindes stellt eine bevorzugte Ausführungsform dar, bei der jeweils die Vertiefungen und die Erhebungen ineinander übergehen und bei der die während des Kunststoffspritzvorgangs einströmenden Verstärkungsfasern optimal umgelenkt werden.

Vorzugsweise wird vorgeschlagen, daß die Tiefe der Vertiefungen und/oder die Höhe der Erhebungen 5 % bis 50 % vorzugsweise 10 % bis 20 % der Wanddicke des Spalttopfes beträgt.

Besonders günstig ist es, wenn die Innenform und/oder die Außenform in den die radialen Bereiche des Spalttopfes ausformenden Formbereichen eine glatte Oberfläche aufweist. In diesen Bereichen ist eine radiale Orientierung der Verstärkungsfasern vorteilhaft, um die dort auftretenden Belastungen optimal aufnehmen zu können.

Die zuvor beschriebenen Merkmale des erfindungsgemäßen Formwerkzeuges bewirken die beabsichtigte Umlenkung der Verstärkungsfasern und sind als Negativform in den entsprechenden Oberflächenbereichen des Spalttopfes abgebildet. Darüberhinaus ist es besonders vorteilhaft, wenn die Verstärkungsfasern des Spalttopfes miteinander vernetzt sind. Dadurch werden besonders gute Festigkeitseigenschaften des Spalttopfes erreicht.

Als Verstärkungsfasern können vorzugsweise Glasfasern oder Kohlefasern vorgesehen sein. Dabei ist es besonders günstig, wenn die Verstärkungsfasern am Spalttopf einen Volumenanteil zwischen 10 % und 50 %, vorzugsweise zwischen 20 % und 40 % haben.

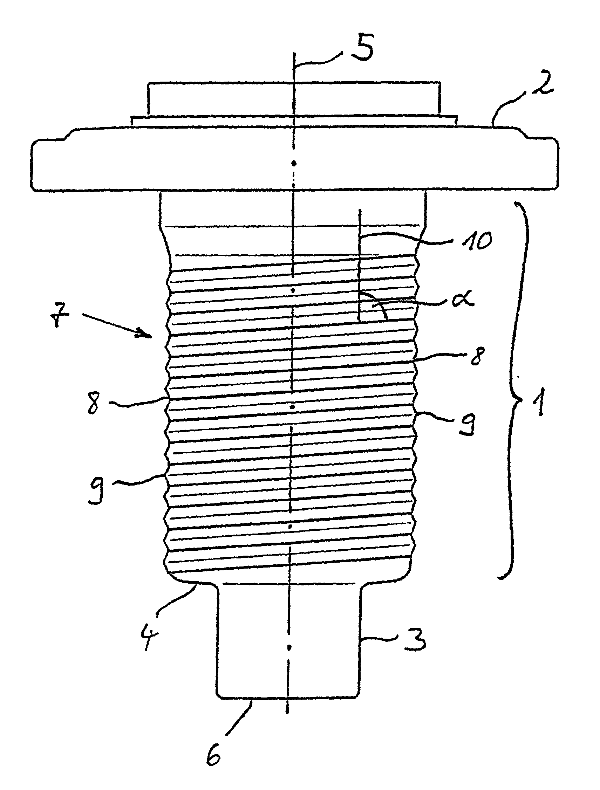

Weitere Vorteile und Merkmale der Erfindung ergeben sich aus den Unteransprüchen sowie aus der nachfolgenden Beschreibung und dem in der Zeichnung dargestellten Ausführungsbeispiel eines erfindungsgemäßen Spalttopfes.

Der in der Zeichnung dargestellte Spalttopf besteht aus glasfaserverstärktem Kunststoff und wird in einer Spalttopfpumpe einer Heizungsanlage eingesetzt. Der Spalttopf hat einen zylindrischen Topfbereich 1, an dessen oberem Rand sich ein Flansch 2 radial nach außen erstreckt. Der Flansch 2 übernimmt die Funktion des Lagerschildes zwischen der Pumpe und dem Motor.

Der Spalttopf bildet an dem der Pumpe abgewandten Ende im Bereich seines Bodens einen topfförmigen Bereich 3 geringeren Durchmessers als der des zylindrischen Topfbereiches 1. In diesem Topf 3 wird ein Lager der Motorwelle befestigt, insbesondere eingedrückt. Die Stufe 4 zwischen dem Topf 3 und dem zylindrischen Topfbereich 1 verläuft in einer zur Achse 5 des Spalttopfs senkrechten Ebene.

Bei dem Kunststoffspritzvorgang erfolgt die Anspritzung an der Mitte des Bodens 6 des Topfes 3. Von hier aus fließt der Kunststoff zunächst über den Boden 6 radial nach außen. Von hier fließt er in axialer Richtung über die Wände des Topfes 3 bis zu der Stufe 4, in der der Kunststoff wiederum radial nach außen fließt. Anschließend wird der zylindrische Topfbereich 1 in axialer Richtung gefüllt, bis der Kunststoff abschließend den Flansch 2 in radialer Richtung nach außen ausfüllt. Grundsätzlich richten sich die einzelnen Verstärkungsfasern dabei in Strömungsrichtung der Kunststoffmasse aus.

Um in den zylindrischen Topfbereich 1 die gewünschte, von der axialen Orientierung abweichende Faserorientierung zu erhalten, ist in die Oberfläche der die Außenwandung des Spalttopfes ausformenden Außenform des nicht dargestellten Formwerkzeugs ein zweigängiges Gewinde 7 eingebracht. Dieses Gewinde 7 findet sich ebenfalls in der Oberfläche des zylindrischen Topfbereichs 1 wieder.

Das Gewinde 7 an dem zylindrischen Topfbereich 1 umfaßt Vertiefungen 8, die durch entsprechende Erhebungen in der Oberfläche der Außenform des Formwerkzeuges ausgeformt sind, sowie Erhebungen 9, die durch entsprechend geformte Vertiefungen in der Oberfläche der Außenform des Formwerkzeugs ausgeformt sind.

Die Erhebungen und Vertiefungen in der Oberfläche des Formwerkzeuges bewirken beim Einströmen der Kunststoffmasse eine Umlenkung der Verstärkungsfasern in Richtung der einzelnen Gewindegänge, d.h. vorwiegend in Umfangsrichtung. Dies entspricht einer Abweichung von einer zur Achse 5 des Spalttopfs parallelen Strecke 10 um einen Winkel α von ca. 85°. Dadurch kann der Spalttopf bei einer Wanddicke von ca. 1 mm auch den bei hohen Drücken von über 10 bar in Umfangsrichtung auftretenden hohen Belastungen ohne Beschädigungen standhalten.

Im Bereich der Stufe 4 und des Flansches 2 sind die Verstärkungsfasern in radialer Richtung orientiert, so daß die Festigkeitseigenschaften des Spalttopfes insgesamt wesentlich verbessert sind.

Statt des Gewindes 7 mit relativ wenigen Vertiefungen 8 und Erhebungen 9 kann die Oberfläche der Formwerkzeuge auch eine aufgerauhte Oberfläche mit einer Vielzahl von regelmäßig oder unregelmäßig geformten und/oder regelmäßig oder unregelmäßig verteilten Vertiefungen und/oder Erhebungen aufweisen.

## Patentansprüche

1. Formwerkzeug zum Herstellen von aus faserverstärktem Kunststoff bestehenden Spalttöpfen für Spalttopfpumpen, insbesondere für Heizungspumpen, Brauchwasserpumpen oder Kühlwasserpumpen, durch Spritzen oder Gießen, mit einer die Innenwandung des Spalttopfes ausformenden Innenform und mit einer die Außenwandung des Spalttopfes ausformenden Außenform,
**dadurch gekennzeichnet,**
**daß** die Innenform und/oder die Außenform eine Oberfläche mit einer Vielzahl von Vertiefungen und/oder Erhebungen aufweist.

2. Formwerkzeug nach Anspruch 1, **dadurch gekennzeichnet, daß** die Innenform und/oder die Außenform eine aufgerauhte Oberfläche aufweist.

3. Formwerkzeug nach Anspruch 1 oder 2, **dadurch gekennzeichnet, daß** die Vertiefungen und/oder Erhebungen in dem Bereich der Formen vorgesehen sind, der zumindest annähernd zylindrische oder konische Bereiche (1) des Spalttopfes ausformt.

4. Formwerkzeug nach Anspruch 3, **dadurch gekennzeichnet, daß** die Vertiefungen und/oder Erhebungen langgestreckt ausgebildet sind, wobei die Richtung der Erstreckung in einem Winkel (α) zu einer zur Achse (5) des Spalttopfes parallelen Strecke (10) verläuft.

5. Formwerkzeug nach einem der vorherigen Ansprüche, **dadurch gekennzeichnet, daß** die Vertiefungen ineinander übergehen und/oder die Erhebungen ineinander übergehen.

6. Formwerkzeug nach einem der vorherigen Ansprüche, **dadurch gekennzeichnet, daß** in die Oberfläche(n) der Form(en) ein eingängiges oder mehrgängiges Gewinde (7) eingebracht ist.

7. Formwerkzeug nach einem der vorherigen Ansprüche, **dadurch gekennzeichnet, daß** die Tiefe der Vertiefung(en) 5% bis 50%, vorzugsweise 10% bis 20% der Wanddicke des Spalttopfes beträgt.

8. Formwerkzeug nach einem der vorherigen Ansprüche, **dadurch gekennzeichnet, daß** die Höhe der Erhebung(en) 5% bis 50%, vorzugsweise 10% bis 20% der Wanddicke des Spalttopfes beträgt.

9. Formwerkzeug nach einem der vorherigen Ansprüche, **dadurch gekennzeichnet, daß** die Innenform und/oder die Außenform in den die radialen Bereiche (2, 4, 6) des Spalttopfes ausformenden Formbereichen eine glatte Oberfläche aufweist.

10. Formwerkzeug nach einem der vorherigen Ansprüche, **dadurch gekennzeichnet, daß** der Spalttopf in der Bodenmitte angespritzt bzw. angegossen wird.

11. Spalttopf für eine Spalttopfpumpe, insbesondere für eine Heizungspumpe, der aus faserverstärktem Kunststoff gespritzt oder gegossen ist, **dadurch gekennzeichnet, daß** er mit einem Formwerkzeug nach einem der vorherigen Ansprüche hergestellt ist.

12. Spalttopf für eine Spalttopfpumpe, insbesondere für eine Heizungspumpe, der aus faserverstärktem Kunststoff gespritzt oder gegossen ist, **dadurch gekennzeichnet, daß** die Innenwandung und/oder die Außenwandung des Spalttopfes in einem zylindrischen oder konischen Bereich (1) eine Vielzahl von Vertiefungen (8) und/oder Erhebungen (9) aufweist und daß die Verstärkungsfasern in diesem Bereich (1) des Spalttopfes in Richtungen verlaufen, die von zur Achse (5) des Spalttopfes parallelen Strecken (10) um Winkel (α) zwischen 5° und 90° abweichen.

13. Spalttopf nach Anspruch 11 oder 12, **dadurch gekennzeichnet, daß** die Verstärkungsfasern miteinander vernetzt sind.

14. Spalttopf nach einem der Ansprüche 11 bis 13, **dadurch gekennzeichnet, daß** als Verstärkungsfasern Glasfasern vorgesehen sind.

15. Spalttopf nach einem der Ansprüche 11 bis 14, **dadurch gekennzeichnet, daß** er 10% bis 50%, vorzugsweise 20% bis 40% Volumenanteil an Verstärkungsfasern aufweist.

## Claims

1. Mould tool for the production of air-gap sleeves consisting of fibre-reinforced plastic material for sleeve pumps, in particular for heating pumps, non-potable water pumps or cooling-water pumps, by injection-moulding or casting, with an inner mould shaping the inner wall of the sleeve and with an outer mould shaping the outer wall of the sleeve, **characterized in that**
the inner mould and/or the outer mould has a surface with a large number of indentations and/or bumps.

2. Mould tool according to Claim 1, **characterized in that** the inner mould and/or the outer mould has a roughened surface.

3. Mould tool according to Claim 1 or Claim 2, **characterized in that** the indentations and/or bumps are provided **in that** region of the moulds in which at least approximately cylindrical or conical regions (1) of the sleeve are formed.

4. Mould tool according to Claim 3, **characterized in that** the indentations and/or bumps are elongated, with the direction of their extension set at an angle (α) to a line (10) parallel with the axis (5) of the sleeve.

5. Mould tool according to any one of the preceding claims, **characterized in that** the indentations merge into one another and/or the bumps merge into one another.

6. Mould tool according to any one of the preceding claims, **characterized in that** a single-lead or multiple-lead screw thread (7) is formed in the surface(s) of the mould(s).

7. Mould tool according to any one of the preceding claims, **characterized in that** the depth of the indentation(s) is 5% to 50%, preferably 10% to 20%, of the wall thickness of the sleeve.

8. Mould tool according to any one of the preceding claims, **characterized in that** the height of the bump(s) is 5% to 50%, preferably 10% to 20%, of the wall thickness of the sleeve.

9. Mould tool according to any one of the preceding claims, **characterized in that** the inner mould and/or the outer mould has a smooth surface in the mould regions shaping the radial regions (2, 4, 6) of the sleeve.

10. Mould tool according to any one of the preceding claims, **characterized in that** the sleeve is injection-moulded or cast starting from the centre of the bottom.

11. Air-gap sleeve for a sleeve pump, in particular for a heating pump, which is injection-moulded or cast from fibre-reinforced plastic material, **characterized in that** it is produced with a mould tool according to any one of the preceding claims.

12. Air-gap sleeve for a sleeve pump, in particular for a heating pump, which is injection-moulded or cast from fibre-reinforced plastic material, **characterized in that** the inner wall and/or the outer wall of the sleeve has a large number of indentations (8) and/or bumps (9) in a cylindrical or conical region (1) and **in that** the reinforcing fibres in this region (1) of the sleeve extend in directions which deviate from lines (10) parallel with the axes (5) of the sleeve by angles (α) of between 5° and 90°.

13. Sleeve according to Claim 11 or Claim 12, **characterized in that** the reinforcing fibres are interlaced with one another.

14. Sleeve according to any one of Claims 11 to 13, **characterized in that** glass fibres are provided as reinforcing fibres.

15. Sleeve according to any one of Claims 11 to 14, **characterized in that** it contains 10% to 50%, preferably 20% to 40%, by volume of reinforcing fibres.

## Revendications

1. Outil de formage pour la fabrication de manchons d'entrefer en matière plastique renforcée de fibres destinés aux pompes à manchon d'entrefer, notamment aux pompes de chauffage, pompes à eaux usées ou pompes à eau de refroidissement, obtenus par injection ou coulée, comprenant un moule intérieur pour la formation de la paroi intérieure du manchon d'entrefer et un moule extérieur pour la formation de la paroi extérieure du manchon d'entrefer, **caractérisé en ce que** le moule intérieur et/ou le moule extérieur présente une surface avec une multitude de creux et/ou de bosses.

2. Outil de formage selon la revendication 1, **caractérisé en ce que** le moule intérieur et/ou le moule extérieur présente une surface rugueuse.

3. Outil de formage selon la revendication 1 ou 2, **caractérisé en ce que** les creux et/ou les bosses sont prévus dans la zone des moules qui forme des zones (1) du manchon d'entrefer du moins approximativement cylindriques ou coniques.

4. Outil de formage selon la revendication 3, **caractérisé en ce que** les creux et/ou les bosses sont allongés, le sens de l'allongement s'étendant dans un angle (α) par rapport à une ligne (10) parallèle à l'axe (5) du manchon d'entrefer.

5. Outil de formage selon l'une des revendications précédentes, **caractérisé en ce que** les creux passent les uns dans les autres et/ou les bosses passent les unes dans les autres.

6. Outil de formage selon l'une des revendications précédentes, **caractérisé en ce que** la (les) surface(s) du (des) moule(s) présente(nt) un filet (7) à pas simple ou à pas multiples.

7. Outil de formage selon l'une des revendications précédentes, **caractérisé en ce que** la profondeur du (des) creux est de 5 % à 50 %, de préférence de 10 % à 20 %, de l'épaisseur de paroi du manchon d'entrefer.

8. Outil de formage selon l'une des revendications précédentes, **caractérisé en ce que** la hauteur de la (des) bosse(s) est de 5 % à 50 %, de préférence de 10 % à 20 % de l'épaisseur de paroi du manchon d'entrefer.

9. Outil de formage selon l'une des revendications précédentes, **caractérisé en ce que** le moule intérieur et/ou le moule extérieur présente une surface lisse dans les zones de moule formant les zones radiales (2, 4, 6) du manchon d'entrefer.

10. Outil de formage selon l'une des revendications précédentes, **caractérisé en ce que** le manchon d'entrefer est rapporté par injection ou par coulée au centre du fond.

11. Manchon d'entrefer pour une pompe à manchon d'entrefer, notamment une pompe de chauffage, injecté ou coulé en matière plastique renforcée en fibres, **caractérisé en ce qu'**il est fabriqué à l'aide d'un outil de formage selon l'une des revendications précédentes.

12. Manchon d'entrefer pour une pompe à manchon d'entrefer, notamment une pompe de chauffage, injecté ou coulé en matière plastique renforcée en fibres, **caractérisé en ce que** la paroi intérieure et/ou la paroi extérieure du manchon d'entrefer présente, dans une zone (1) cylindrique ou conique, une multitude de creux (8) et/ou de bosses (9), et que les fibres de renforcement dans cette zone (1) du manchon d'entrefer s'étendent dans des sens décalés de lignes (10) parallèles à l'axe (5) du manchon d'entrefer d'angles (α) compris entre 5° et 90°.

13. Manchon d'entrefer selon la revendication 11 ou 12, **caractérisé en ce que** les fibres de renforcement sont réticulées les unes avec les autres.

14. Manchon d'entrefer selon l'une des revendications 11 à 13, **caractérisé en ce que** des fibres de verre sont prévues comme fibres de renforcement.

15. Manchon d'entrefer selon l'une des revendications 11 à 14, **caractérisé en ce qu'**il présente une proportion en volume de fibres de renforcement de 10 % à 50 %, de préférence de 20% à 40%.
